(19) Europäisches Patentamt
European Patent Office
Office européen des brevets

(11) **EP 1 481 169 B1**

(12) **EUROPÄISCHE PATENTSCHRIFT**

(45) Veröffentlichungstag und Bekanntmachung des Hinweises auf die Patenterteilung:
**11.04.2007 Patentblatt 2007/15**

(21) Anmeldenummer: 03701422.2

(22) Anmeldetag: **17.02.2003**

(51) Int Cl.:
**F15B 15/10** *(2006.01)*

(86) Internationale Anmeldenummer:
**PCT/CH2003/000110**

(87) Internationale Veröffentlichungsnummer:
**WO 2003/074885 (12.09.2003 Gazette 2003/37)**

(54) **PNEUMATISCHER AKTUATOR**

PNEUMATIC ACTUATOR

ACTIONNEUR PNEUMATIQUE

(84) Benannte Vertragsstaaten:
**AT BE BG CH CY CZ DE DK EE ES FI FR GB GR HU IE IT LI LU MC NL PT SE SI SK TR**

(30) Priorität: **04.03.2002 CH 376022002**

(43) Veröffentlichungstag der Anmeldung:
**01.12.2004 Patentblatt 2004/49**

(73) Patentinhaber: **Prospective Concepts AG 8152 Glattbrugg (CH)**

(72) Erfinder:
• **KEREKES, Laszlo
CH-8037 Zürich (CH)**
• **MOOR, Tina
CH-2072 St. Blaise (CH)**

(74) Vertreter: **Salgo, Reinhold Caspar
Rütistrasse 103
8636 Wald (CH)**

(56) Entgegenhaltungen:
WO-A-01/72479          DE-A- 19 617 852
US-A- 3 973 363          US-A- 5 469 756

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft einen pneumatischen Aktuator nach dem Oberbegriff des Patentanspruches 1.

Pneumatische Aktuatoren ohne Pneumatikzylinder sind explizite oder auch implizite mehrere bekannt, so z.B. aus DE 196 17 852 (D1), aus EP 0 851 829 (D2) und der PCT-Anmeldung PCT/CH02/00370 (D3), die beiden letzteren von derselben Anmelderin wie der vorliegenden Erfindung.

In D1 wird ein Verfahren beschrieben, welches der einfachen Herstellung pneumatischer und fluidischer Miniaturmanipulatoren aus Folien dienen soll. Die Wirkungsweise dieser Manipulatoren beruht auf der durch aufblasbaren und sich dadurch verkürzenden Luftkammern resultierenden Zugkraft, welche in einem stabilisierenden pneumatischen Stützelement ein Biegemoment erzeugt und zu einer Krümmung des Manipulators auf die Seite der aufgeblasenen Kammern hin führt.

Die Wirkungsweise von D2 und D3 beruht grundsätzlich - wie auch jene von Pneumatikzylindern - auf der Volumenzunahme eines pneumatischen Elementes, meist verbunden mit einer Druckzunahme mindestens in diesem Elemente selbst.

In D2 geht es um einen pneumatischen adaptiven Flügel, dessen Wölbung mittels pneumatischer Elemente geändert werden kann, so wie um eigentliche pneumatische Aktuatoren zur Betätigung der Querruder.

D3 beschreibt einen Aktuator zur Betätigung von klappenartigen Bauteilen, wobei das klappenartige Bauteil auch selbst als Aktuator eingesetzt werden kann.

Der Nachteil des in D1 als ein erstes Ausführungsbeispiel beschriebenen Manipulators besteht vor allem darin, dass die Oberflächenspannung bei derart kleinen Biegeradien sehr gering ist und nur äusserst kleine Kräfte mit Hilfe eines dergestalten Manipulators ausgeübt werden können, ohne dass das pneumatische Stützelement einknickt und dadurch jegliche Fähigkeit, Druckkräfte aufzunehmen, verliert. In D1 ist erklärtermassen von Mikromanipulatoren die Rede, welche nicht für eine grossmasstabliche Anwendung im Makrobereich und mit Kräften im Bereich von einem oder mehreren Newton geeignet sind.

Der Nachteil der in D1, D2 und D3 beschriebenen Aktuatoren im weitesten Sinne besteht vor allem darin, dass beim Betätigen des Aktuators auftretende Druckkräfte - im Sinne des Schliessens von Kraftvektor-Polygonen - nur durch die, wiederum durch Luftdruck bewirkte, Härte eines ebenfalls pneumatischen Elementes aufgenommen und kompensiert werden können, insbesondere als diese letztgenannten pneumatischen Elemente erfindungsgemäss im Wesentlichen aus druckluftbeaufschlagten textilen Bauteilen bestehen. Die aufzunehmenden Druckkräfte sind damit grundsätzlich auf

$$F = p \cdot A$$

beschränkt, wo

    F = Kraft [in N]
    p = Luftdruck [in N/m$^2$]
    A = Querschnittfläche des Bauteils [in m$^2$]

Die durch D2 beschriebene Erfindung besteht im Wesentlichen aus einem luftdichten textilen Schlauch, welcher parallel zur Schwenkachse eines schwenkbaren klappenartigen Bauteils eingebaut ist. Wird dieser Schlauch durch Druckluft beaufschlagt, so nimmt seine Querdimension zu. Durch plattenartige bewegliche Bauteile, welche längs am genannten Schlauch anliegen, wird dessen Querausdehnung aufgenommen und als Kraft bzw. Drehmoment auf das klappenartige Bauteil übertragen. Der Nachteil des in D2 geschilderten Aktuators liegt in seiner Begrenztheit des Einsatzes auf alle solchen Probleme, wo das klappenartige Bauteil selbst als Lösung verwendet werden kann, oder wo dessen einfache Schwenkbarkeit leicht - durch weitere Schub-, Zug- oder Drehmittel - in weitere Bewegungen oder Betätigungen umgesetzt werden kann.

Die Aufgabe der vorliegenden Erfindung liegt in der Schaffung eines vielfach formbaren, modifizierbaren und einsetzbaren pneumatischen Aktuators, bei welchem die das Vektorpolygon schliessenden Reaktionskräfte nicht durch weitere pneumatische Elemente übernommen wird oder werden muss.

Die Lösung der gestellten Aufgabe ist wiedergegeben im Patentanspruch 1 hinsichtlich ihrer wesentlichen Merkmale, in den weiteren Patentansprüchen hinsichtlich weiterer vorteilhafter Ausbildungen.

Anhand der beigefügten Zeichnung wird der Erfindungsgedanken mit Hilfe mehrerer Ausführungsbeispiele näher erläutert. Es zeigen

Fig. 1a      ein erstes Ausführungsbeispiel im Schnitt im inaktiven Zustande,

Fig. 1b      das Ausführungsbeispiel von Fig. 1a im aktivierten Zustande,

Fig. 1c      das Ausführungsbeispiel von Fig. 1a in einer Perspektive,

Fig. 2      eine Variante zu Fig. 1a, b, c,

Fig. 3      ein zweites Ausführungsbeispiel im Schnitt,

Fig. 4      eine weitere Variante zu Fig. 1a, b, c,

Fig. 5      eine Draufsicht auf ein drittes Ausführungsbeispiel im inaktiven Zustande,

Fig. 6       eine Perspektive des dritten Ausführungsbeispiels im aktivierten Zustande,

Fig. 7a      ein viertes Ausführungsbeispiel im Schnitt im
            inaktiven Zustande,

Fig. 7b      das Ausführungsbeispiel von Fig. 7a im aktivierten Zustande im Schnitt,

Fig. 8       ein fünftes Ausführungsbeispiel im aktivierten Zustande im Schnitt,

Fig. 9       ein sechstes Ausführungsbeispiel im aktivierten Zustande im Schnitt,

Fig. 10a     eine Variante zum Ausführungsbeispiel von

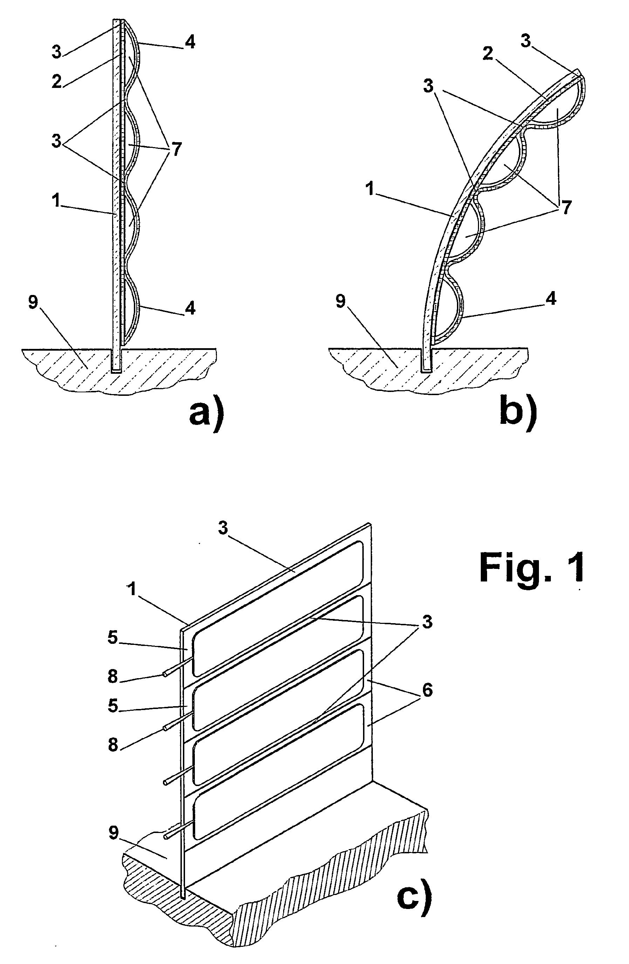

            Fig. 1a im inaktiven Zustande im Schnitt,

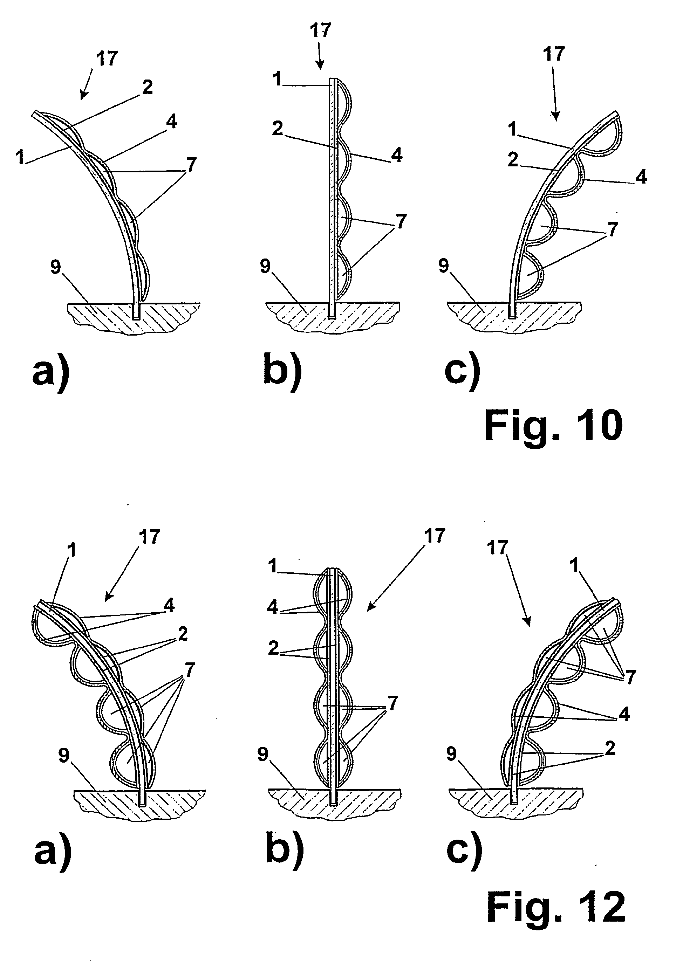

Fig. 10b     das Ausführungsbeispiel von Fig. 10a mit
            mittlerem Druck aktiviert, im Schnitt,

Fig. 10c     das Ausführungsbeispiel von Fig. 10b mit höherem Druck aktiviert, im Schnitt,

Fig. 11      ein Awendungsbeispiel des Ausführungsbeispiels von Fig. 10a, b, c,

Fig. 12a     ein siebtes Ausführungsbeispiel im drucklosen Zustande,

Fig. 12b     das Ausführungsbeispiel von Fig. 12a im aktivierten Zustande der einen Seite,

Fig. 12c     das Ausführungsbeispiel von Fig. 12a im aktivierten Zustande der anderen Seite,

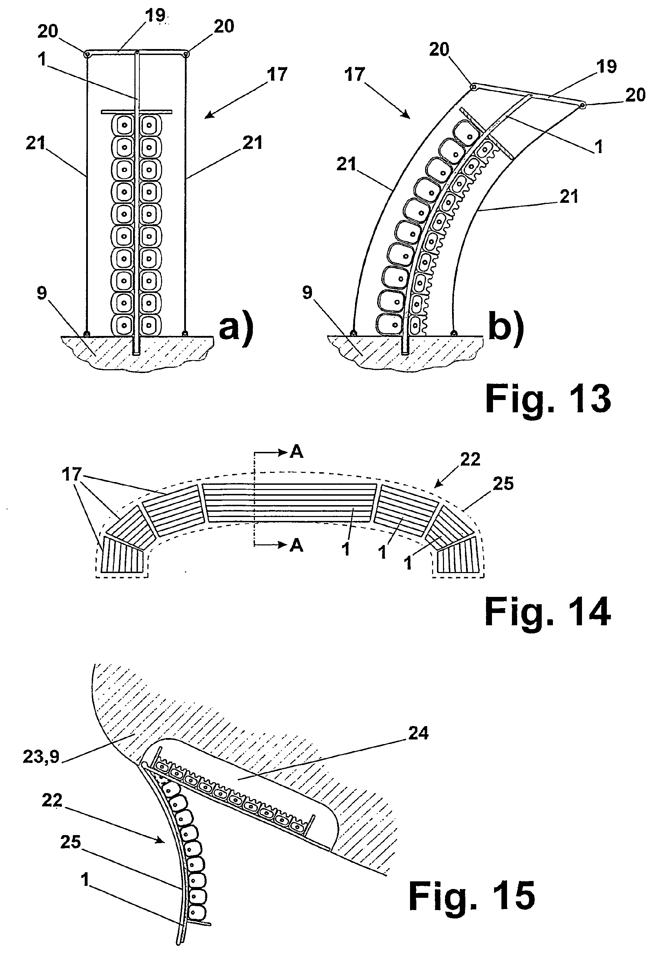

Fig. 13a     ein achtes Ausführungsbeispiel im inaktiven
            Zustande, im Schnitt,

Fig. 13b     das Ausführungsbeispiel von Fig. 13a im aktivierten Zustande der einen Seite,

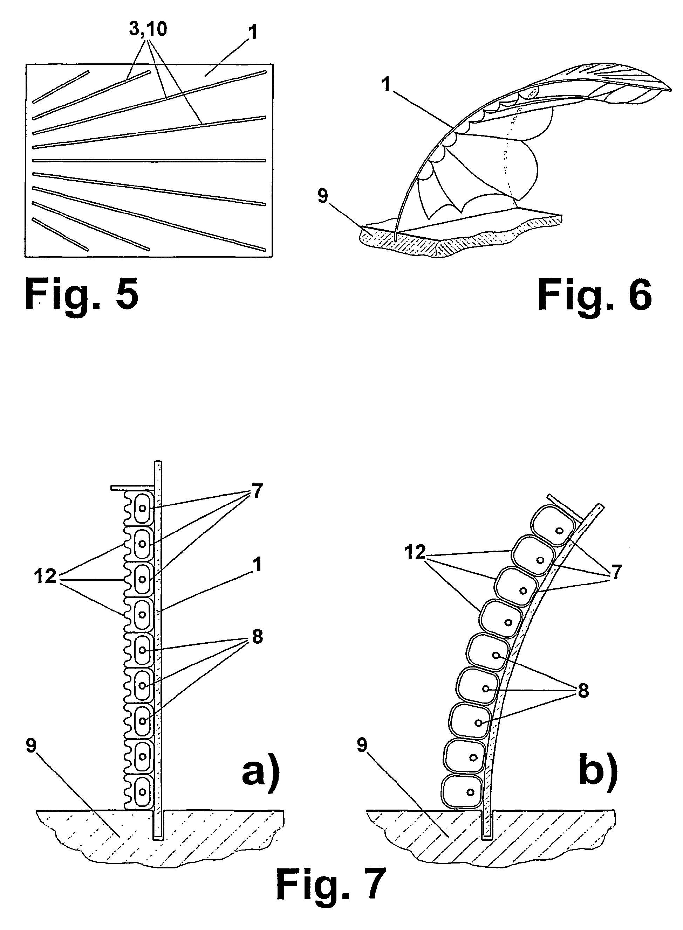

Fig. 14      ein Ausführungsbeispiel hinsichtlich der Verwendung von Aktuatoren gemäss Fig. 7 in
            einer Draufsicht im inaktiven Zustande,

Fig. 15      ein Schnitt durch das Ausführungsbeispiel
            gemäss Fig. 14 im aktivierten Zustande,

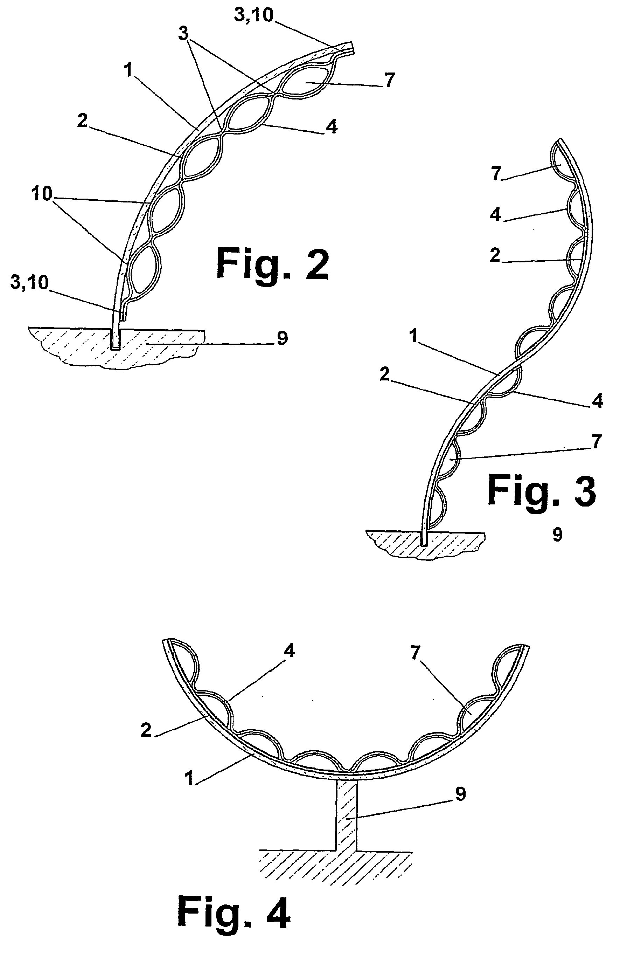

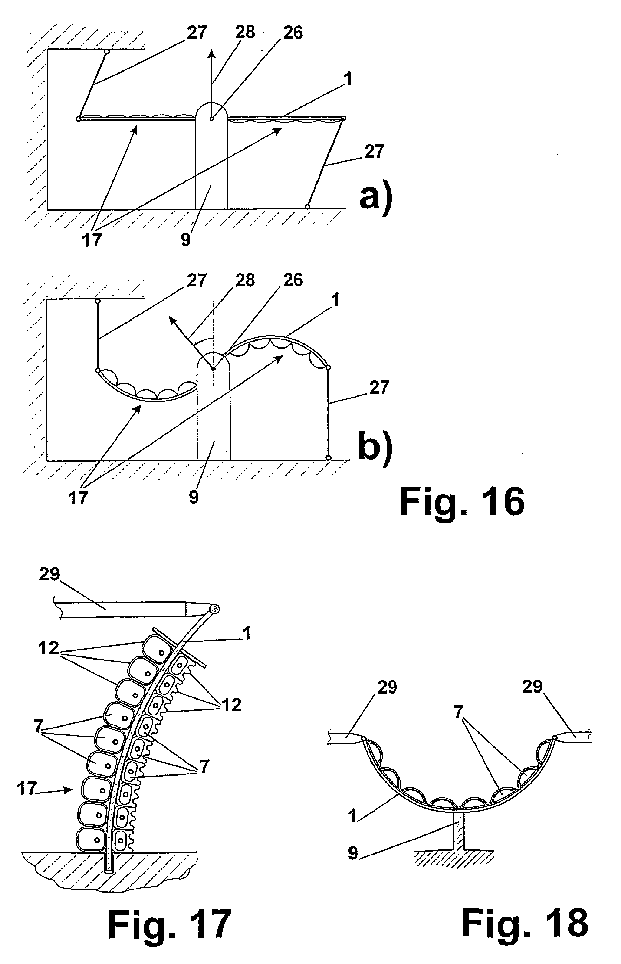

Fig. 16a     ein Anwendungsbeispiel des Aktuators gemäss Fig. 3 im drucklosen Zustande,

Fig. 16b     das Ausführungsbeispiel von Fig. 16a im aktivierten Zustande,

Fig. 17      eine Erweiterung des Ausführungsbeispiel
            gemäss Fig. 7,

Fig. 18      eine Erweiterung des Ausführungsbeispiel
            gemäss Fig. 4.

Fig. 1 zeigt ein erstes Ausführungsbeispiel des Erfindungsgedankens im Querschnitt, Fig. 1a im inaktiven, Fig. 1b im aktiven druckluftbeaufschlagten Zustande, Fig. 1c eine perspektivische Darstellung von Fig. 1a.

Im Aufbau besteht dieses erste Ausführungsbeispiel aus einer im Wesentlichen ebenen Platte 1 konstanter Dicke aus einem steifen, jedoch biegeelastischen Material, wie beispielsweise Federstahl, GFK, CFK. Auf diese Platte 1 ist - beispielsweise durch Kleben - eine erste Bahn 2 eines hochfesten und dehnungsarmen textilen Gewebes aus beispielsweise Aramidfasern befestigt. Die Befestigung erfolgt vorzugsweise, jedoch nicht ausschliesslich, entlang mehrerer - hier fünf - Streifen 3. Auf die erste Bahn 2 ist eine zweite Bahn 4 aufgesetzt, welche mit der ersten Bahn 2 entlang der gleichen Streifen 3 befestigt ist, durch Kleben, Nähen oder Schweissen. Wie in Fig. 1c gezeigt, kann die zweite Bahn 4 mit der ersten Bahn 2 auch entlang des vorderen und hinteren Randes 5, 6 der Platte 1 verbunden sein. Zwischen die Streifen 3 sind in die losen Teile der ersten und der zweiten Bahn 2, 4 Blasen 7 aus einem elastischen Kunststoff eingelegt, welche beispielsweise entlang des Randes 5 je ein Ventil 8 aufweisen. Die Platte 1 ist hier in einem ein Bezugssystem 9 definierenden Bauteil befestigt.

Werden nun die Blasen 7 mit Druckluft beaufschlagt, so blähen sie sich seitlich und spannen damit die zweite Bahn 4, welche dabei die in Fig. 1b dargestellte Form annimmt. Da diese zweite Bahn 4 aus einem wenig dehnbaren textilen Material gefertigt ist und ihre Länge durch die gezeigte Verformung nicht zunimmt, verkürzen sich die Sehnen durch die Blasen 7 nach Massgabe der Auswölbungen der zweiten Bahn 4: Die Platte 1 wird gebogen. Sofern die Abstände zwischen den Streifen 3 überall gleich gross sind, ist der entstehende Bogen ein Kreissegment. Die Anordnung der Bahnen 2, 4 wird also auf Zug beansprucht. Da sich die Platte 1 dabei biegt, entsteht eine Kraftkomponente senkrecht zur Fläche der Platte in Richtung der Innenseite ihrer Wölbung. Die Kraftpolygone werden geschlossen durch Druckkräfte in der Platte 1, welche tangentiell zur Platte 1 verlaufen und durch Reaktionskräfte nach der Aussenseite von deren Wölbung. Die genannte Anordnung der Bahnen 2, 4 und der Blasen 7 wird charakterisierend als Zuganordnung benannt.

Die zu Fig. 1 gemachten Vorgaben können nun vielfältig variiert werden: Die Abstände der Streifen 3 können ungleich gemacht werden, womit bei kleineren Abständen grössere Krümmungsradien der Platte 1 entstehen; die Blasen 7 können durch unterschiedliche Drucke beaufschlagt werden, wodurch höhere Drucke kleinere Krümmungsradien bewirken; die Dicke der Platte 1 kann über deren Längsdimension geändert werden, womit die Steifigkeit der Platte 1 ändert; je steifer die Platte 1, desto grösser der Krümmungsradius. Selbstverständlich können mehrere dieser Parameter gleichzeitig von der ursprünglichen Vorgabe abweichen, womit die Krümmungsradien über die Länge der Platte 1 praktisch beliebig variiert werden können.

Ferner kann die erste Bahn 2 so an der Platte 1 befestigt werden, wie in Fig. 2 gezeigt. Die Verbindungsstellen der ersten Bahn 2 liegen hier auf Streifen 10, welche nicht mit den Streifen 3 zusammenfallen, längs welcher die beiden Bahnen 2, 4 verbunden sind, sondern sind im Wesentlichen dort vorgesehen, wo die erste Bahn 2 am stärksten ausbaucht, wenn die Blasen 7 druckluftbeaufschlagt werden. Lediglich an den Enden der zwei Bahnen 2, 4 fallen die Streifen 3 und 10 zusammen. Ferner können eigentliche Sollbiegestellen der Platte 1 vorgesehen werden, indem die Platte 1 entlang vorgesehener Linien, beispielsweise der Linien 3 oder Linien 10, Nuten trägt, wodurch bereits kleinere Biegemomente eine Biegung der Platte 1 entlang dieser Sollbiegestellen bewirken.

In Fig. 3 ist ein zweites Ausführungsbeispiel dargestellt. Hier sind im - in der Zeichnung - unteren Teil der Platte 1 die Bahnen 2, 4 auf der einen Seite der Platte 1 angeordnet, im oberen Teil auf der anderen Seite. Beim Aufblasen der Blasen 7 ergibt sich dann die in Fig. 3 gezeichnete Art der S-förmigen Krümmung. Selbstverständlich können mehrere solche Seitenwechsel angeordnet werden, worauf sich eine mehrfach S-förmige Schlangenlinie ergibt. Ebenso können alle bisher beschriebenen Alternativ-Varianten einzeln oder kumuliert eingebaut werden, woraus sich eine Fülle von erfindungsgemässen Lösungen ergibt.

Fig. 4 entspricht grundsätzlich der Darstellung von Fig. 1, jedoch ist die Platte 1 nicht an einem ihrer Enden mit dem Bezugssystem 9 verbunden, sondern in ihrer Mitte. Jede andere Befestigungsstelle ist natürlich im Erfindungsgedanken mit enthalten. Die Platte 1 wölbt sich dann rinnenförmig auf. Die Bahnen 2, 4 können an der Verbindungsstelle mit dem Bezugssystem 9 unterbrochen sein, wie dargestellt, oder aber darüber hinweg verlaufen. Alternativ zu einer Momente übertragenden Befestigung kann auch eine gelenkige treten, so dass die Platte 1 als Ganzes noch in Bezug auf das Bezugssystem 9 schwenkbar ist. Ebenso ist es in Fig. 4 mitenthalten, die Bahnen 2, 4 mit den Blasen 7 auf der in der Darstellung unteren Seite der Platte 1 anzubringen, so dass deren Wölbung nach unten erfolgt. Wiederum sind alle bereits beschriebenen Varianten bezüglich der Gestaltung der Platte 1 und der aus Bahnen 2, 4 und Blasen 7, zusammen als pneumatische Elemente bezeichnet, im Ausführungsbeispiel gemäss Fig. 4 mitenthalten.

Fig. 5 ist die Draufsicht auf die Platte 1 eines dritten Ausführungsbeispiels. Die Streifen 3, bzw. Streifen 10, sind hier nicht parallel zueinander, sondern konvergent angeordnet. Die Streifen 3, 10 sind hier geradlinig vorgesehen, können jedoch auch so gekrümmt sind, dass durch die beschriebenen Verkürzungen die vorgesehenen Biegemomente in der Platte 1 aufgebaut werden.

In Fig. 6 ist die Platte im Bezugssystem 9 so eingespannt, wie in Fig. 1 dargestellt. Einspannarten, wie zu Fig. 4 beschrieben, gehören jedoch genauso zu diesem Ausführungsbeispiel, wie alle Varianten betreffend die pneumatischen Elemente. Werden bei diesem Ausführungsbeispiel die Blasen 7 mit Druckluft beaufschlagt, so krümmt sich die Platte 1 in die Form eines Konus-Segmentes.

In Fig. 7 ist ein viertes Ausführungsbeispiel des Erfindungsgedankens dargestellt. Fig. 7a zeigt diese im drucklosen,

Fig. 7b im druckluftbeaufschlagten Zustande. Auf der Platte 1 sind eine Vielzahl schlauchartiger Hüllen 12 angeordnet aus wenig dehnbarem textilem Material, entsprechend demjenigen der Bahnen 2, 4. Die Hüllen 12 sind im Wesentlichen mit ihren ganzen an die Platte 1 angrenzenden Rückflächen verbunden, sei dies durch Kleben, Schweissen oder mittels geeigneter mechanischer Verbindung. In diese Hüllen 12, die sich im Wesentlichen über die ganze Breite der Platte 1 erstrecken, sind wiederum schlauchartige Blasen 7 mit Ventilen 8 eingelegt. Im drucklosen Zustande sind die Blasen 7 schlaff, die Platte 1 hat die ursprüngliche Form, beispielsweise eben, wie in Fig. 7a dargestellt.

Werden nun die Blasen 7 mit Druckluft gefüllt, so dehnen sie sich aus bis zu ihrer maximalen Grösse, welche durch die äusseren Hüllen 12 begrenzt wird. Sobald die Hüllen 12 beim Aufblasen der Blasen 7 gegenseitig Kräfte aufeinander ausüben, bewirken sie Biegemomente in der Platte 1 und zwingen diese, falls sie ursprünglich eben ist, in die in Fig. 7b dargestellte Form. Der erzielte Krümmungsradius hängt ab von der pro gewählter Längeneinheit eingesetzten Anzahl von Blasen 7 mit Hüllen 12, dem ausgeübten Luftdruck und der Form der Hüllen 12, ferner von der Dicke der Platte 1, deren Material und Elastizitätsmodul. Da die Blasen 7 hier gegenseitig Druckkräfte aufeinander ausüben und über die erzeugten Biegemomente die Platte 1 von den pneumatischen Elementen weggebogen wird, erhalten die Druckkräfte eine auf die Innenseite der Wölbung der Platte weisende Kraftkomponente. Der Hauptteil der Druckkräfte wird als Zugkraft in der Platte 1 kompensiert. Diese Anordnung der pneumatischen Elemente wird fortan als Druckanordnung charakterisiert.

Wie anhand des ersten Ausführungsbeispiels ausgeführt, können auch bei diesem folgende Grössen variiert werden: Die Abstände der Blasen 7, die Dicke der Platte 1, die Drücke in den Blasen 7. Dergestalt können die Krümmungsradien über den Verlauf der Platte 1 den konkreten Bedürfnissen angepasst werden. Wiederum sind auch Sollbiegestellen der beschriebenen Art erfindungsgemäss.

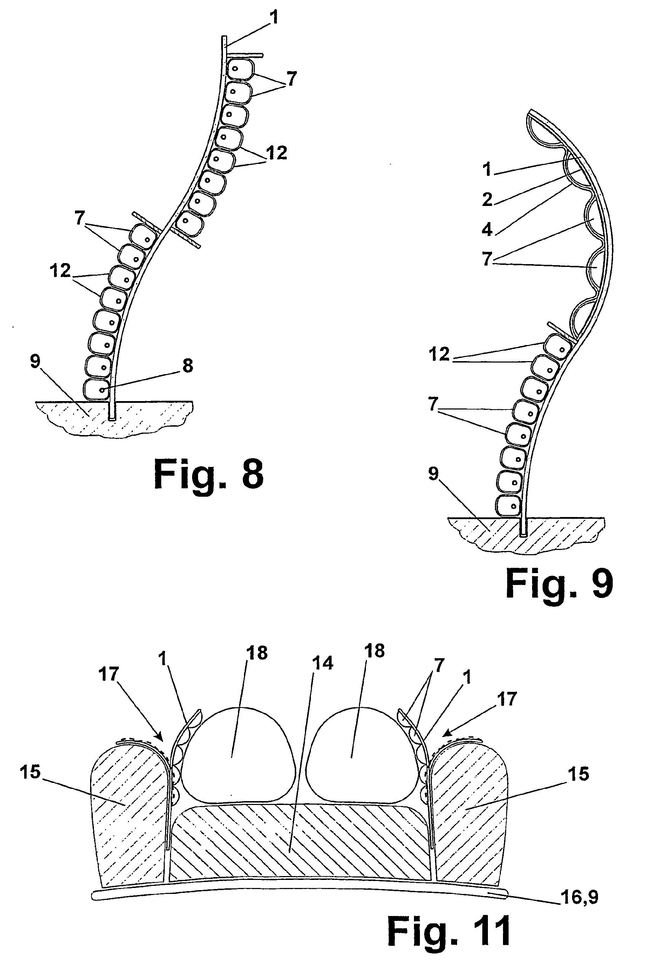

Fig. 8 stellt ein fünftes Ausführungsbeispiel dar und entspricht im Grundgedanken jenem von Fig. 3 hinsichtlich der Anordnung der Blasen 7, mit dem Unterschied, dass diese hier auf der Krümmungsaussenseite der Platte 1 Druckkräfte ausüben, wogegen beim Ausführungsbeispiel von Fig. 3 auf der Innenseite der Krümmung Zugkräfte ausgeübt werden. Die Platte 1 steht hier - zur Schliessung der Kräftepolygone - unter tangentiell zur Platte 1 verlaufenden Zugkräften; beim Ausführungsbeispiel gemäss Fig. 3 sind es tangentiell verlaufende Druckkräfte.

Das sechste Ausführungsbeispiel von Fig. 9 weist in seinem unteren Teil bezüglich des Bezugssystems 9 eine Anordnung der Blasen 7 gemäss Fig. 7 auf, also eine Druckanordnung, in seinem oberen eine solche gemäss Fig. 1, also eine Zuganordnung, wobei in beiden Fällen die Blasen 7 auf der gleichen Seite der Platte 1 angeordnet sind, wodurch dann, wenn die Blasen 7 unter Druck gesetzt werden, die gleiche S-förmige Verformung der Platte 1 entsteht, wie in Fig. 3, 8.

Wiederum können hier sämtliche bereits erwähnten Parameter variiert werden, wodurch eine Fülle von Verformungen bewirkt werden kann. Ebenfalls ist es bei den Ausführungsbeispielen gemäss Fig. 6, 7, 8, 9 natürlich möglich, die Platte an einer Stelle zwischen ihren Enden mit dem Bezugssystem entweder fest oder aber gelenkig zu verbinden, wie zu Fig. 3 ausgeführt.

Im Ausführungsbeispiel gemäss Fig. 10a, b, c, ist die Ausgangsform der Platte 1, wie in Fig. 10a dargestellt, im drucklosen Zustande der Blasen 7 gekrümmt, und zwar so, dass die Anordnung von Blasen 7 und Bahnen 2, 4 gemäss Fig. 1, auf die Aussenseite der Krümmung zu liegen kommen.

Durch mässigen Druck in den Blasen 7 kann die Platte 1 in die ebene Form gebracht werden, wie in Fig. 10b gezeigt, bei noch höherem Druck wird sie in die in Fig. 10c gezeigte Form gebogen. Bei gleicher Vorbiegung der Platte 1 gemäss Fig. 10a kann der gleiche Erfolg bewirkt werden mit einer Druckanordnung der Blasen 7 gemäss Fig. 7, sofern die Blasen 7 auf der im Vergleich mit Fig. 10a anderen Seite der Platte 1 angebracht sind.

Fig. 11 ist die Darstellung eines ersten Anwendungsbeispiels der Erfindung. Sie zeigt schematisch einen Automobilsitz 13 von vorne. Dieser ist unterteilt in ein Sitzpolster 14 und zwei Seitenpolster 15, wie heute üblich. Zwischen Sitzpolster 14 und den beiden Seitenpolstern 15 ist je ein pneumatischer Aktuator 17, beispielsweise gemäss Fig. 10, eingesetzt und in einem Sitzrahmen 16, als Bezugssystem 9, verankert. Im drucklosen Zustande liegen die beiden Aktuatoren 17 an den Sitzpolstern 15 an und bilden somit einen Teil davon. Werden die Blasen 7 mit Druckluft beaufschlagt, so krümmen sich die Platten 1 nach innen, bis sie seitlich an - schematisch im Schnitt dargestellten - Oberschenkeln 18 der fahrenden Person anliegen und diese bei Kurvenfahrt des Automobils seitlich stützen.

Im siebten Ausführungsbeispiel gemäss Fig. 12 sind pneumatische Elemente gemäss Fig. 1 oder 2 beidseitig der Platte 1 angebracht. Fig. 12a zeigt den so gestalteten pneumatischen Aktuator 17 mit Zuganordnung im drucklosen Zustand und, bei ebener Platte 1, in neutraler Mittelstellung. In Fig. 12b sind die pneumatischen Elemente der linken Seite der Platte 1 unter Druck, also aktiv, in Fig. 12c sind es die der rechten Seite. Damit entsteht ein beidseitig steuerbarer Aktuator 17.

Das achte Ausführungsbeispiel gemäss Fig. 13 ist analog zu jenem von Fig. 12 aufgebaut, verwendet jedoch die pneumatischen Elemente des Ausführungsbeispiels von Fig. 7, also eine Druckanordnung. Am oberen Ende der Platte 1 ist hier noch eine Wippe 19 gelenkig angebracht, welche sich beispielsweise über die ganze - senkrecht zur Zeichenebene verlaufende - Breite der Platte 1 erstreckt. Diese Wippe 19 weist an ihren Enden ebenfalls Gelenke 20 auf, in welchen die oberen Enden von zwei weiteren biegsamen Platten 21 gelagert sind. Diese sind an ihren unteren Enden am Bezugssystem 9 befestigt.

Werden nun die Blasen 7 auf der in Fig. 13a, b linken Seite der Platte 1 mit Druckluft beaufschlagt, so biegt sich die Platte 1 nach rechts, wie bereits zu Fig. 7b ausgeführt. Gleichermassen biegen sich hier auch die weiteren Platten 21. Damit ist der so ausgeführte Aktuator 17 vor mechanischen Verletzungen geschützt.

Die Ausführung mit den weiteren Platten 21 lässt sich selbstverständlich bei allen vorangehenden Ausführungsbeispielen realisieren. Ein Aktuator 17 gemäss Fig. 13 ist beispielsweise als Weiche bei Stück- oder Schüttgut-Fördereinrichtungen einsetzbar.

Fig. 14 und 15 zeigen ein weiteres Ausführungsbeispiel des Erfindungsgedankens hinsichtlich der Verwendung solcher bisher beschriebener Aktuatoren 17, beispielsweise gemäss Fig. 7. Bei diesem Anwendungsbeispiel wird gezeigt, dass der Aktuator 17, der grundsätzlich einachsige Krümmung aufweist, auch eingesetzt werden kann, um mehrachsig gekrümmte Vorrichtungen zu betätigen. Die hier im Sinne eines Beispiels gewählte Vorrichtung ist ein Frontspoiler 22 eines Automobils.

Fig. 14 zeigt die Draufsicht von oben, Fig. 15 den Querschnitt AA. Die grundsätzlich vorgesehene Wölbung des Frontspoilers 22 wird so wahrgenommen, dass mehrere - hier beispielsweise sieben - Aktuatoren 17 beispielsweise gemäss Fig. 7, also in Druckanordnung, entlang eines Stossfängers 23 als Bezugssystem 9 befestigt sind. Im drucklosen Zustande liegen diese Aktuatoren 17 in einer Bucht 24 des Stossfängers 23; die pneumatischen Elemente, ohnehin auf der oberen/ hinteren Seite der Platten 1 liegend, sind damit vor Schmutz, Steinschlag und Nässe geschützt. Aussen/vorne sind die Aktuatoren mit einer elastischen Schürze 25 überzogen, die einerseits die Form glättet, anderseits die Aktuatoren 17 schützt.

Soll der Frontspoiler 22 nun ausgefahren werden, so werden die pneumatischen Elemente aktiviert, die Platten 1 biegen sich nach vorne/unten und dehnen gleichzeitig die elastische Schürze 25. Im Sinne der Erfindung kann hier auf der Hinterseite des Aktuators 17 eine weitere Platte 21 mit einer Wippe 19 angebracht werden; zusätzlich können die Platten 1, 21 seitlich durch einen elastischen Kunststoff verbunden werden, womit die pneumatischen Elemente völlig vor der Witterung geschützt sind.

Mit entsprechender Änderung der Form der Schürze 25 und allenfalls der Zahl der Aktuatoren 17 ist das Anwendungsbeispiel selbstverständlich ebenso für Heckspoiler einsetzbar. Die Bucht 24 ist dann in der Region eines Kofferraumes des Fahrzeuges untergebracht, und die Schürze 25 deckt in eingefahrenem Zustande die ganze Vorrichtung glatt ab.

Fig. 16 zeigt ein Anwendungsbeispiel eines pneumatischen Aktuators 17, beispielsweise gemäss Fig. 3 in Zuganordnung, in welchem der Aktuator 17 ein Drehmoment erzeugen und dieses an eine weitere Vorrichtung abgeben kann. Das Anwendungsbeispiel hat nur beispielsweisen Charakter. Der Aktuator ist am Bezugssystem 9 um eine Achse 26 schwenkbar gelagert und mittels zweier schwenkbarer Platten 27 gelenkig geführt und im drucklosen Zustand beispielsweise eben. Werden seine pneumatischen Elemente unter Druck gesetzt, so verformt sich die Platte 1, wie bereits beschrieben, S-förmig. Dies bewirkt eine Drehung der Platte 1 um die Achse 26, was durch die Drehung eines bloss symbolischen Zeigers 28 verdeutlicht wird.

Anstelle des Aktuators 17 in Zuganordnung gemäss Fig. 3 kann selbstverständlich auch einer in Druckanordnung gemäss Fig. 8 eingesetzt werden, einschliesslich aller bereits beschriebenen Varianten.

In Fig. 17 ist eine weitere erfindungsgemässe Anwendung des Pneumatischen Aktuators 17 dargestellt. Vorzugsweise am oberen Ende der Platte 1 gemäss Fig. 17, ist eine Stange 29 gelenkig gelagert, welche Zug- und Druckkräfte übertragen kann. Der pneumatische Aktuator 17 in der Druckanordnung ist hier gemäss Fig. 7a, b aufgebaut, mit der Ergänzung, dass Blasen 7 mit Hüllen 12 beidseits der Platte 1 angeordnet sind. Damit kann der Aktuator 17 auf beide Seiten gebogen werden, mit dem entsprechenden Arbeitswege der Stange 29. Im Sinne der Erfindung sind alle Anordnungen gemäss der Fig. 1, 2, 7, 10, 12, 13 mit solchen Stangen 29 oder mechanisch äquivalenten Maschinenelementen einsetzbar. In vielen Anwendungsfällen vermag eine solche schematisch beschriebene Vorrichtung Pneumatikzylinder zu ersetzen, mit dem Vorteil, dass die zu überwindende Reibung vernachlässigbar klein ist.

Eine entsprechende Ausgestaltung des Ausführungsbeispieles gemäss Fig. 4 zeigt Fig. 18. Hier tragen beide Enden der Platte 1 je eine Stange 29 angelenkt. Die Platte 1 kann in drucklosem Zustande der Blasen 7 bereits gebogen sein wie dargestellt. Damit kann das Kraft-/Wegverhalten der Stangen 29 leicht den konkreten Bedürfnissen angepasst werden.

**Patentansprüche**

1. Pneumatischer Aktuator **dadurch gekennzeichnet, dass** er aufgebaut ist

   - aus einer biegeelastischen Platte (1),
   - mindestens zwei langgestreckten, nebeneinander angeordneten und teilweise mit der Platte (1) verbundenen flexiblen, aber wenig dehnbaren pneumatischen Druckadern, welche so an der Platte (1) befestigt und angeordnet sind, dass bei Druckgasbeaufschlagung dieser Druckadern parallel zu der Platte (1) verlaufende Tangentialkräfte entstehen, welche zu einer Biegung der Platte (1) führen.

2. Pneumatischer Aktuator nach Patentanspruch 1, **dadurch gekennzeichnet, dass** die Druckadern bestehen aus einer flexiblen Hülle (4a, 12) aus wenig dehnbarem textilen Material und einer in diese Hülle (4a, 12) eingelegten druckgasdichten Blase (7).

3. Pneumatischer Aktuator nach Patentanspruch 2, **dadurch gekennzeichnet, dass**

   - die Hülle (4a) besteht aus einer ersten Bahn (2) eines wenig dehnbaren textilen Materials, welche auf im Wesentlichen parallel zueinander verlaufenden Streifen (3) mit der Platte (1) verbunden ist, ferner aus einer zweiten, die erste Bahn (2) bedeckenden zweiten Bahn (4) aus einem wenig dehnbaren textilen Material, welche entlang der genannten Streifen (3) mit der ersten Bahn (2) verbunden ist, wodurch die langgestreckten Hüllen (4a) zwischen den Bahnen (2, 4) gebildet werden,
   - die Blasen (7) in die Hüllen (4a) eingelegt sind,
   - bei Druckgasbeaufschlagung der Blasen (7) sich die Bahnen (2, 4) zwischen den Streifen (3) auswölben und damit auf die Platte (1) tangentiell verlaufende Zugkräfte ausgeübt werden, was zu einer Biegung der Platte (1) auf die Seite der Druckadern führt, wodurch eine Zuganordnung definiert ist.

4. Pneumatischer Aktuator nach Patentanspruch 2, **dadurch gekennzeichnet, dass**

   - die Hülle (4a) besteht aus einer ersten Bahn (2) eines wenig dehnbaren textilen Materials, welche auf im Wesentlichen parallel zueinander verlaufenden Streifen (10) mit der Platte (1) verbunden ist, ferner aus einer die erste Bahn (2) bedeckenden zweiten Bahn (4) aus einem wenig dehnbaren textilen Material, welche entlang von parallel zu den genannten Streifen (10) verlaufenden Streifen (3) mit der ersten Bahn (2) verbunden ist, wodurch die langgestreckten Hüllen (4a) zwischen den Bahnen (2, 4) gebildet werden,
   - die Blasen (7) in die Hüllen (4a) eingelegt sind,
   - bei Druckbeaufschlagung der Blasen (7) sich die Bahnen (2, 4) zwischen den Streifen (3) auswölben, und damit auf die Platte (1) tangentiell verlaufende Zugkräfte ausgeübt werden, was zu einer Biegung der Platte (1) auf die Seite der Druckadern führt, wodurch ebenfalls eine Zuganordnung definiert ist.

5. Pneumatischer Aktuator nach Patentanspruch 2, **dadurch gekennzeichnet, dass**

    - die Hüllen (12) schlauchartig sind und aus wenig dehnbarem textilen Material bestehen,
    - die Hüllen (12) auf einem Teil ihres Umfanges mit der Platte (1) verbunden sind,
    - die Blasen (7) in die Hüllen (12) eingelegt sind und die Blasen (7) zusammen mit den Hüllen (12) die Druckadern bilden,
    - bei Druckgasbeaufschlagung der Blasen (7) die Druckadern aufeinander Druckkräfte ausüben, wodurch tangentiell zur Platte (1) verlaufende Druckkräfte entstehen, was zu einer Biegung der Platte (1) auf die den Druckadern abgewandte Seite der Platte (1) führt, wodurch eine Druckanordnung definiert ist.

6. Pneumatischer Aktuator nach Patentanspruch 3 oder 4, **dadurch gekennzeichnet, dass** pro Platte nur eine aus mehreren Druckblasen gebildete Zuganordnung vorhanden ist.

7. Pneumatischer Aktuator nach Patentanspruch 3 oder 4, **dadurch gekennzeichnet, dass** pro Platte mindestens zwei je aus mehreren Druckblasen gebildeten Zuganordnungen vorhanden sind.

8. Pneumatischer Aktuator nach Patentanspruch 7, **dadurch gekennzeichnet, dass** alle Zuganordnungen auf der gleichen Seite der Platte (1) angebracht sind.

9. Pneumatischer Aktuator nach Patentanspruch 7, **dadurch gekennzeichnet, dass** die Zuganordnungen alternierend zueinander auf beiden Seiten der Platte (1) angebracht sind, wodurch sich bei gleichzeitiger Druckbeaufschlagung der Zuganordnung eine mehrfach S-förmige Biegung der Platte (1) ergibt.

10. Pneumatischer Aktuator nach Patentanspruch 7, **dadurch gekennzeichnet, dass** die Zuganordnungen auf beiden Seiten der Platte (1) angebracht sind und alternierend zueinander mit Druckgas beaufschlagt werden können, so dass sich die Platte (1) wahlweise auf die eine oder andere Seite biegen kann.

11. Pneumatischer Aktuator nach Patentanspruch 5, **dadurch gekennzeichnet, dass** pro Platte nur eine aus mehreren Druckblasen gebildete Druckanordnung vorhanden ist.

12. Pneumatischer Aktuator nach Patentanspruch 5, **dadurch gekennzeichnet, dass** pro Platte mindestens zwei je aus mehreren Druckblasen gebildeten Druckanordnungen vorhanden sind.

13. Pneumatischer Aktuator nach Patentanspruch 12, **dadurch gekennzeichnet, dass** alle Druckanordnungen auf der gleichen Seite der Platte (1) angebracht sind.

14. Pneumatischer Aktuator nach Patentanspruch 12, **dadurch gekennzeichnet, dass** die Druckanordnungen zueinander auf beiden Seiten der Platte (1) angebracht sind, wodurch sich bei gleichzeitiger Druckbeaufschlagung der Druckanordnung eine mehrfach S-förmige Biegung der Platte (1) ergibt.

15. Pneumatischer Aktuator nach Patentanspruch 12, **dadurch gekennzeichnet, dass** die Druckanordnungen auf beiden Seiten der Platte (1) angebracht sind und alternierend zueinander mit Druckgas beaufschlagt werden können, so dass sich die Platte (1) wahlweise auf die eine oder andere Seite biegen kann.

16. Pneumatischer Aktuator nach Patentanspruch 3 oder 4, und 6, **dadurch gekennzeichnet, dass** pro Platte (1) mindestens je eine Zuganordnung und eine Druckanordnung vorhanden und an der Platte (1) befestigt sind.

17. Pneumatischer Aktuator nach Patentanspruch 16, **dadurch gekennzeichnet, dass** die Zuganordnung und die Druckanordnung auf der gleichen Seite der Platte (1) angebracht sind, welche sich bei gleichzeitiger Druckgasbeaufschlagung der Zuganordnung und der Druckanordnung mindesten einfach S-förmig biegt.

18. Pneumatischer Aktuator nach Patentanspruch 3 oder 4, und 5, **dadurch gekennzeichnet, dass** pro Platte (1) mindestens je eine Zuganordnung und eine Druckanordnung vorhanden und an der Platte (1) befestigt sind.

19. Verwendung von pneumatischen Aktuatoren gemäss Patentanspruch 6 oder 11 als pneumatisch aktivierbare Seitenstützen eines Fahrzeugsitzes (13), **dadurch gekennzeichnet, dass**

    - auf jeder Seite eines Sitzpolsters (14) ein pneumatischer Aktuator (17) angeordnet und an einem Sitzrahmen (16) als einem festen Bezugssystem (9) befestigt ist,
    - der pneumatische Aktuator (17) eine im drucklosen Zustande des pneumatischen Aktuators (17) gebogenen Platte (1) aufweist, welche im drucklosen Zustande auf einem Seitenpolster (15) anliegen kann,

- die pneumatische Aktuatoren (17) mit Druckgas beaufschlagt werden können und sich so vom Seitenpolster (15) wegbiegen und mindestens teilweise über die Oberschenkel (18) einer fahrenden Person legen und diese seitlich stützen können.

20. Verwendung des pneumatischen Aktuators gemäss Patentanspruch 11 als pneumatisch aktivierbarer Frontspoiler (22) eines Automobils mit einem vorderen Stossfänger (23) und einer dahinter angeordneten Bucht (24) zur Aufnahme des drucklosen Frontspoilers (22), **dadurch gekennzeichnet, dass**

- mindestens ein pneumatischer Aktuator auf der Unterseite des Automobils entlang des Stossfängers (23) am einen Ende der Platte (1) befestigt ist, wobei die Druckanordnungen auf der Oberseite jeder Platte (1) angeordnet und befestigt sind,
- der mindestens eine pneumatische Aktuator mindestens, in der normalen Fahrtrichtung des Automobils, vorne mit einer Schürze (25) aus einem elastischen Kunststoff versehen und überzogen ist zum Schutze des pneumatischen Aktuators,
- der mindestens eine pneumatische Aktuator sich bei Druckgasbeaufschlagung nach vorne und unten biegt und damit die Form und Funktion eines Frontspoilers an- und übernehmen kann,
- der mindestens eine pneumatische Aktuator sich bei Wegnahme des Gasdruckes durch die Elastizität der Platte (1) in die Bucht (24) zurückbiegt.

21. Verwendung des pneumatischen Aktuators nach Patentanspruch 20, **dadurch gekennzeichnet, dass** der Frontspoilet aus mindestens drei pneumatischen Aktuatoren besteht, welche mit einer gemeinsamen Schürze (25) aus elastischem Kunststoff überzogen sind.

22. Verwendung des pneumatischen Aktuators gemäss Patentanspruch 11 als pneumatisch aktivierbarer Heckspoiler eines Automobils mit einem Kofferraum und einer in dessen Bereich angeordneten Bucht (24) zur Aufnahme des drucklosen Heckspoilers, **dadurch gekennzeichnet, dass**

- mindestens ein pneumatischer Aktuator am Rande der Bucht (24) am einen Ende der Platte (1) befestigt ist, wobei die Druckanordnung auf der Unterseite jeder Platte (1) angeordnet und befestigt ist,
- der mindestens eine pneumatische Aktuator mindestens oben mit einer Schürze (25 aus einem elastischen Kunststoff versehen und überzogen ist,
- der mindestens eine pneumatische Aktuator sich bei Druckgasbeaufschlagung nach oben und vorne biegt und damit die Form und Funktion eines Heckspoilers an- und übernehmen kann,
- der mindestens eine pneumatische Aktuator sich bei Wegnahme des Gasdruckes durch die Elastizität der Platte (1) in die Bucht (24) zurückbiegt.

**Claims**

1. A pneumatic actuator, **characterized in that** it is constructed

- from a flexible plate (1),
- at least two elongate, flexible but poorly expandable pneumatic pressure ducts, which are disposed side by side and are partially connected with the plate (1), to which plate (1) they are fastened and on which they are arranged in such a manner that, when said pressure ducts are pressurized, tangential forces, which cause the plate (1) to bend, are created parallel to the plate (1).

2. The pneumatic actuator according to patent claim 1, **characterized in that** the pressure ducts consist of a flexible envelope (4a, 12) made of poorly expandable textile material and of a gas-tight bubble (7) inserted in said envelope (4a, 12).

3. The pneumatic actuator according to patent claim 2, **characterized in that**

- the envelope (4a) consists of a first web (2) of a poorly expandable textile material, which is connected with the plate (1) on strips (3), which are oriented substantially parallel to one another, further of a second web (4) covering the first web (2) and being made of a poorly expandable textile material, said second web being connected with the first web (2) along strips (3), which are oriented parallel to said strips (10), thus forming the elongate envelopes (4a) between the webs (2, 4),
- the bubbles (7) are inserted into the envelopes (4a),
- if the bubbles (7) are pressurized, the webs (2, 4) between the strips (3) bulge and thus exert onto the plate (1) tangentially oriented tensile forces, which causes the plate (1) to bend on the side of the pressure ducts, thus defining a tensile arrangement.

4. The pneumatic actuator according to patent claim 2, **characterized in that**

- the envelope (4a) consists of a first web (2) of a poorly expandable textile material, which is connected with the plate (1) on strips (10), which are substantially oriented parallel to one another, further of a second web (4) covering the first web (2) and being made of a poorly expandable textile material, said second web being connected with the first web (2) along strips (3) oriented parallel to said strips (10), thus forming the elongate envelopes (4a) between the webs (2, 4),
- the bubbles (7) are inserted into the envelopes (4a),
- if the bubbles (7) are pressurized, the webs (2, 4) between the strips (3) bulge and thus exert onto the plate (1) tangentially oriented tensile forces, which causes the plate (1) to bend on the side of the pressure ducts, thus also defining a tensile arrangement.

5. The pneumatic actuator according to patent claim 2, **characterized in that**

- the envelopes (12) are configured like tubes and consist of poorly expandable textile material,
- the envelopes (12) are connected with the plate (1) on a part of their circumference,
- the bubbles (7) are inserted in the envelopes (12) and the bubbles (7), together with the envelopes (12), form the pressure ducts,
- if the bubbles (7) are pressurized, the pressure ducts exert pressure forces onto one another, thus creating pressure forces oriented tangentially to the plate (1), which causes the plate (1) to bend on the side of the plate (1), which faces away from the pressure ducts, thus defining a pressure arrangement.

6. The pneumatic actuator according to patent claim 3 or 4, **characterized in that** only one tensile arrangement formed from a plurality of pressure bubbles is provided for each plate.

7. The pneumatic actuator according to patent claim 3 or 4, **characterized in that**, at least two tensile arrangements, which are each formed from a plurality of pressure bubbles, are provided for each plate.

8. The pneumatic actuator according to patent claim 7, **characterized in that** all of the tensile arrangements are mounted to the same side of the plate (1).

9. The pneumatic actuator according to patent claim 7, **characterized in that** the tensile arrangements are installed on either side of the plate (1) in an alternating manner, resulting in a multiple S-shape bending of the plate (1), if the tensile arrangement is simultaneously pressurized.

10. The pneumatic actuator according to patent claim 7, **characterized in that** the tensile arrangements are installed to either side of the plate (1) and can be alternatingly pressurized with compressed gas so that the plate (1) can alternatively bend to the one or to the other side.

11. The pneumatic actuator according to patent claim 5, **characterized in that** only one pressure arrangement formed from a plurality of pressure bubbles is provided for each plate.

12. The pneumatic actuator according to patent claim 5, **characterized in that** at least two pressure arrangements, which are each formed from a plurality of pressure bubbles, are provided for each plate.

13. The pneumatic actuator according to patent claim 12, **characterized in that** all of the pressure arrangements are installed to the same side of the plate (1).

14. The pneumatic actuator according to patent claim 12, **characterized in that** the pressure arrangements are installed on either side of the plate (1), resulting in a multiple S-shape bending of the plate (1), if the pressure arrangement is simultaneously pressurized.

15. The pneumatic actuator according to patent claim 12, **characterized in that** the pressure arrangements are installed on either side of the plate (1) and can be alternatingly pressurized with compressed gas so that the plate (1) can alternatively bend to the one or to the other side.

16. The pneumatic actuator according to patent claim 3 or 4, and 6, **characterized in that**, for each plate (1), at least one tensile arrangement and one pressure arrangement each are provided and fastened to the plate (1).

17. The pneumatic actuator according to patent claim 16, **characterized in that** the tensile arrangement and the pressure arrangement are installed on the same side of the plate (1) which bends to form at least the shape of one S, if the tensile arrangement and the pressure arrangement are simultaneously pressurized.

18. The pneumatic actuator according to patent claim 3 or 4, and 5, **characterized in that**, for each plate (1), at least one tensile arrangement and one pressure arrangement are provided and fastened to the plate (1).

**19.** Use of pneumatic actuators according to patent claim 6 or 11 as pneumatically actuatable side supports of a vehicle seat (13), **characterized in that**

- on each side of a seat cushion (14) there is disposed a pneumatic actuator (17), which is fastened to a seat frame (16) employed as a stationary reference system (9),
- the pneumatic actuator (17) comprises a plate (1), which is bent in the unpressurized state of the pneumatic actuator (17) and which may abut on a side cushion (15) in the unpressurized state,
- the pneumatic actuators (17) can be pressurized with compressed gas, thus bending away from the side cushion (15) and coming to rest, at least partially, on a driver's thighs (18), which they are capable of supporting laterally.

**20.** The use of the pneumatic actuator according to patent claim 11 as a pneumatically actuatable front spoiler (22) of an automobile with a front shock absorber (23) and, disposed therebehind, a bight (24) for receiving the unpressurized front spoiler (22), **characterized in that**

- at least one pneumatic actuator is fastened to the one end of the plate (1) on the underside of the automobile alongside the shock absorber (23), whereby the pressure arrangements are disposed and fastened to the upper side of each plate (1),
- the at least one pneumatic actuator is provided and coated at least to the front, in the normal direction of travel, with an apron (25) made of an elastic plastic material for protecting the pneumatic actuator,
- the at least one pneumatic actuator bends toward the front and downward when pressurized, thus being capable of adopting the shape and performing the function of a front spoiler,
- the at least one pneumatic actuator bends back into the bight (24) due to the elasticity of the plate (1), when the gas pressure is removed.

**21.** The use of the pneumatic actuator according to patent claim 20, **characterized in that** the front spoiler consists of at least three pneumatic actuators, which are coated with a common apron (25) made of an elastic plastic material.

**22.** The use of the pneumatic actuator according to patent claim 11 as a pneumatically actuatable rear spoiler of an automobile with a trunk and a bight (24) disposed in the region thereof for receiving the unpressurized rear spoiler, **characterized in that**

- at least one pneumatic actuator is fastened to the one end of the plate (1) on the edge of the bight (24), whereby the pressure arrangement is disposed and fastened to the underside of each plate (1),
- the at least one pneumatic actuator is provided and coated, at least in the top portion, with an apron (25) made of an elastic plastic material,
- the at least one pneumatic actuator bends upward and toward the front when pressurized, thus being capable of adopting the shape and performing the function of a rear spoiler,
- the at least one pneumatic actuator bends back into the bight (24) due to the elasticity of the plate (1), when the gas pressure is removed.

**Revendications**

**1.** Actionneur pneumatique, **caractérisé en ce qu'**il est constitué

- d'une plaque (1) élastique en flexion,
- d'au moins deux conducteurs de pression pneumatiques, flexibles, mais peu extensibles, placés côte à côte et partiellement reliés avec la plaque (1), qui sont fixés et placés sur la plaque (1), de sorte que lorsque ces conducteurs de pression sont soumis à un gaz sous pression, à la parallèle de la plaque (1), il en résulte des forces tangentielles qui provoquent une flexion de la plaque (1).

**2.** Actionneur pneumatique selon la revendication 1, **caractérisé en ce que** les conducteurs de pression consistent en une gaine flexible (4a, 12) en matière peu extensible et en un bouillon (7) étanche au gaz sous pression, inséré dans cette gaine (4a, 12).

**3.** Actionneur pneumatique selon la revendication 2, **caractérisé en ce que**

- la gaine (4a) consiste en un premier lé (2) d'une matière textile peu extensible, qui est relié sur des bandes (3) s'étendant sensiblement en parallèle avec la plaque (1), par ailleurs en un deuxième lé (4) en matière textile peu extensible, recouvrant le premier lé (2), qui le long des bandes (3) citées est relié avec le premier lé (2), pour former les gaines (4a) longitudinales entre les lés (2,4)
- les bouillons (7) sont insérés dans les gaines (4a),
- lorsque les bouillons (7) sont soumis à un gaz sous pression, les lés (2,4) forment une voussure entre les bandes (3) et de ce fait, des forces de traction s'étendant de façon tangentielle sont exercées sur la plaque (1), ce qui mène à une flexion de la plaque (1) sur le côté des conducteurs de pression, ceci définissant une configuration de traction.

4. Actionneur pneumatique selon la revendication 2, **caractérisé en ce que**

   - la gaine (4a) consiste en un premier lé (2) d'une matière textile peu extensible, qui est relié sur des bandes (10) s'étendant sensiblement en parallèle avec la plaque (1), par ailleurs en un deuxième lé (4) en matière textile peu extensible, recouvrant le premier lé (2), qui le long de bandes (3) s'étendant en parallèle des bandes (10) citées est relié avec le premier lé (2), pour former les gaines (2) longitudinales entre les lés (2, 4a),
   - les bouillons (7) sont insérés dans les gaines (4a),
   - lorsque les bouillons (7) sont soumis à un gaz sous pression, les lés (2,4) forment une voussure entre les bandes (3) et de ce fait, des forces de traction s'étendant de façon tangentielle sont exercées sur la plaque (1), ce qui mène à une flexion de la plaque (1) sur le côté des conducteurs de pression, ceci définissant également une configuration de traction.

5. Actionneur pneumatique selon la revendication 2, **caractérisé en ce que**

   - les gaines (12) sont vermiculaires et consistent dans une matière textile peu extensible,
   - sur une partie de leur périphérie, les gaines (12) sont reliées avec la plaque (1),
   - les bouillons (7) sont insérés dans les gaines (12) et en association avec les gaines (12), les bouillons (7) forment les conducteurs de pression,
   - lorsque les bouillons (7) sont soumis à un gaz sous pression, les conducteurs de pression exercent des forces de pression les uns sur les autres, ce qui donne naissance à des forces de pression s'étendant de façon tangentielle à la plaque (1), ce qui mène à une flexion de la plaque (1) sur le côté de la plaque (1) qui est opposé aux conducteurs de pression, ceci définissant une configuration de pression.

6. Actionneur pneumatique selon la revendication 3 ou 4, **caractérisé en ce que** seule une configuration de traction formée de plusieurs bouillons sous pression est présente pour chaque plaque.

7. Actionneur pneumatique selon la revendication 3 ou 4, **caractérisé en ce que** au moins deux configurations de traction formées chacune de plusieurs bouillons sous pression sont présentes pour chaque plaque.

8. Actionneur pneumatique selon la revendication 7, **caractérisé en ce que** toutes les configurations de traction sont montées sur le même côté de la plaque (1).

9. Actionneur pneumatique selon la revendication 7, **caractérisé en ce que** les configurations de traction sont montées en alternance réciproque sur les deux côtés de la plaque (1), ce qui lorsque la configuration de traction est soumise simultanément à une pression, donne naissance à une flexion multiple en forme de S de la plaque (1).

10. Actionneur pneumatique selon la revendication 7, **caractérisé en ce que** les configurations de traction sont montées des deux côtés de la plaque (1) et peuvent être soumises en alternance réciproque à un gaz sous pression, pour que la plaque (1) puisse fléchir au choix sur l'un ou sur l'autre côté.

11. Actionneur pneumatique selon la revendication 5, **caractérisé en ce que** seule une configuration de pression formée de plusieurs bouillons sous pression est présente pour chaque plaque.

12. Actionneur pneumatique selon la revendication 5, **caractérisé en ce que** au moins deux configurations de pression, formées chacune de plusieurs bouillons de pression sont présentes pour chaque plaque.

13. Actionneur pneumatique selon la revendication 12, **caractérisé en ce que** toutes les configurations de pression sont montées sur le même côté de la plaque (1).

14. Actionneur pneumatique selon la revendication 12, **caractérisé en ce que** les configurations de pression sont montées en alternance réciproque sur les deux côtés de la plaque (1), ce qui lorsque la configuration de pression est soumise simultanément à une pression, donne naissance à une flexion multiple en forme de S de la plaque (1).

15. Actionneur pneumatique selon la revendication 12, **caractérisé en ce que** les configurations de pression sont montées des deux côtés de la plaque (1) et peuvent être soumises en alternance réciproque à un gaz sous pression, pour que la plaque (1) puisse fléchir au choix sur l'un ou sur l'autre côté.

16. Actionneur pneumatique selon la revendication 3 ou 4 et 6, **caractérisé en ce que** pour chaque plaque (1), au moins respectivement une configuration de traction et une configuration de pression sont présentes et fixées sur la plaque (1).

17. Actionneur pneumatique selon la revendication 16, **caractérisé en ce que** la configuration de traction et la configuration de pression sont montées sur le même côté de la plaque (1), qui lorsque la configuration de traction et la configuration de pression sont soumises simultanément à un gaz sous pression se fléchit au moins une fois en forme de S.

18. Actionneur pneumatique selon la revendication 3 ou 4 et 5, **caractérisé en ce que** pour chaque plaque (1), au moins respectivement une configuration de traction et une configuration de pression sont présentes et fixées sur la plaque (1).

19. Mise en oeuvre d'actionneurs pneumatiques selon la revendication 6 ou 11 en tant que supports latéraux à manoeuvre pneumatique d'un siège de véhicule (13), **caractérisée**

  - **en ce qu'**un actionneur (17) est placé sur chaque côté d'un rembourrage d'assise (14) et fixé sur un cadre de siège (16) faisant office de système de référence (9) fixe,
  - **en ce que** l'actionneur pneumatique (17) comporte une plaque (1) fléchie en l'absence de pression dans l'actionneur pneumatique (17), qui en l'absence de pression peut s'appuyer sur un rembourrage latéral (15), en ce que les actionneurs pneumatiques (17) peuvent être soumis à un gaz sous pression et fléchissent en s'éloignant du rembourrage latéral (15) et se placent au moins partiellement sur les cuisses (18) d'une personne qui conduit et sont susceptibles de la soutenir latéralement.

20. Mise en oeuvre de l'actionneur pneumatique selon la revendication 11 en tant que spoiler frontal (22) à manoeuvre pneumatique d'une automobile, avec un pare-chocs avant (23) et une anse (24) placée derrière celui-ci, pour loger le spoiler frontal (22) non soumis à pression, **caractérisé en ce que**

  - au moins un actionneur pneumatique est fixé sur la face inférieure de l'automobile, le long du pare-chocs (23), sur une extrémité de la plaque (1), les configurations de pression étant placées et fixées sur la face supérieure de chaque plaque (1),
  - le au moins un actionneur pneumatique est muni et revêtu dans le sens de déplacement normal de l'automobile, au moins à l'avant d'un tablier (25) en une matière plastique élastique, pour protéger l'actionneur pneumatique,
  - lorsqu'il est soumis à un gaz sous pression, le au moins un actionneur fléchit vers l'avant et vers le bas et peut ainsi adopter la forme et la fonction d'un spoiler frontal,
  - le au moins un actionneur pneumatique fléchit en arrière dans l'anse (24) sous l'effet d'élasticité de la plaque (1), lorsque la pression gazeuse est retirée.

21. Mise en oeuvre de l'actionneur pneumatique selon la revendication 20, **caractérisé en ce que** le spoiler frontal consiste en au moins trois actionneurs pneumatiques, qui sont revêtus d'un tablier (25) commun en matière plastique élastique.

22. Mise en oeuvre de l'actionneur pneumatique selon la revendication 11 en tant que spoiler arrière à manoeuvre pneumatique d'une automobile, avec un coffre à bagages et une anse (24) placée dans la zone de celui-ci, pour loger le spoiler arrière non soumis à pression, **caractérisé en ce que**

  - au moins un actionneur pneumatique est fixé sur le bord de l'anse (24), sur une extrémité de la plaque (1), la configuration de pression étant placée et fixée sur le côté inférieur de chaque plaque (1)
  - le au moins un actionneur pneumatique est muni au moins sur le dessus et revêtu d'un tablier (25) en une matière plastique élastique,
  - lorsqu'il est soumis à un gaz sous pression, le au moins un actionneur fléchit vers le haut et vers l'avant et peut ainsi adopter la forme et la fonction d'un spoiler arrière,
  - le au moins un actionneur pneumatique fléchit en arrière dans l'anse (24) sous l'effet d'élasticité de la plaque (1), lorsque la pression gazeuse est retirée.

**Fig. 1**

Fig. 2

Fig. 3

Fig. 4

3,10    1

# Fig. 5

1

9

# Fig. 6

7

12

1

8

9

a)

12

7

8

9

b)

# Fig. 7

**Fig. 8**

**Fig. 9**

**Fig. 11**

a)

b)

c)

**Fig. 10**

a)

b)

c)

**Fig. 12**

a)

b)

**Fig. 13**

**Fig. 14**

**Fig. 15**

**Fig. 16**

**Fig. 17**

**Fig. 18**